# EUROPÄISCHE PATENTANMELDUNG

(11) **EP 0 858 824 A1**
(43) Veröffentlichungstag der Anmeldung: **19.08.1998**
(21) Anmeldenummer: 97122247.6
(22) Anmeldetag: 17.12.1997
(51) Int. Cl.: B01D 29/68, B01D 33/50

(54) **Filter für Flüssigkeiten, insbesondere Spaltfilter**

(30) Priorität: 20.01.1997 DE 19701689
(71) Anmelder: FILTERWERK MANN & HUMMEL GmbH, 71638 Ludwigsburg (DE)
(72) Erfinder: Keller, Lothar, 70176 Stuttgart (DE); Marton, Imre, 71638 Ludwigsburg (DE); Pawlik, Richard E., 71696 Möglingen (DE); Schaal, Wolfgang, 71522 Backnang (DE)
(74) Vertreter: Voth, Gerhard, Dipl.-Ing.

(57) **Zusammenfassung**

Es wird ein Filter für Flüssigkeiten vorgeschlagen. Dieses ist insbesondere ein Spaltfilter mit einer ebenen oder gekrümmten Filterfläche sowie einem die Filterfläche partiell erfassenden Reinigungssystem. Das Reinigungssystem besteht aus einer im Rohflüssigkeitsbereich angebrachten Rückspülkammer 28, welche wenigstens zwei Trennwände 47, 48 aufweist. Diese Trennwände begrenzen die Rückspülkammer zu dem Rohflüssigkeitsbereich und liegen an der Filterfläche bzw. an einem Filterelement 17 an. Die Trennwände sind in Richtung der Filterfläche oder des Filterelements elastisch ausgebildet oder unabhängig voneinander federnd gelagert.

## Beschreibung

Die Erfindung betrifft ein Filter für Flüssigkeiten, insbesondere Spaltfilter mit einer ebenen oder gekrümmten Filterfläche nach dem Oberbegriff des Hauptanspruchs.

Aus der DE-PS 32 09 216 ist ein abschnittsweise rückspülbares Flüssigkeitsfilter bekannt, bei dem ein hohlzylindrisches Filterelement vorgesehen ist. Dieses trennt innerhalb eines Filtergehäuses einen Filtratraum von einem Schmutzflüssigkeitsraum ab. Das Flüssigkeitsfilter enthält ferner eine Schmutzabfuhrrinne, die parallel zur Achse des Filterelementes angeordnet ist und einen U-förmigen Querschnitt aufweist.

Zum Abreinigen der Oberfläche des Flüssigkeitsfilters wird dieser um seine Achse gedreht und der Schmutzabfuhrkanal geöffnet, so daß aufgrund des im Inneren des hohlzylindrischen Filterelementes herrschenden Drucks Flüssigkeit durch das an der Oberfläche des Filterelementes angeordnete Filtergewebe strömt. Die an dem Filtergewebe anhaftenden Partikel werden durch die Strömung mitgenommen und über einen Scbmutzabfuhrkanal abgeleitet.

Normalerweise läßt sich die Größe der in der zu reinigenden Flüssigkeit enthaltenen Partikel nicht exakt definieren. So können unter Umständen auch Partikel angeschwemmt werden, die ein Mehrfaches der Filterspaltweite aufweisen. Die Abreinigung solcher Partikel mit der bekannten Rückspüleinrichtung wird dadurch erschwert, daß diese Rückspüleinrichtung einerseits einen möglichst geschlossenen und nur zu dem Filterbereich geöffneten U-förmigen Querschnitt aufweist, andererseits aber auch größere Partikel am Umfang des Filterelementes in die Schmutzabfuhrrinne hineingelangen sollen. Dadurch ergibt sich an der Vorderkante der Schmutzabfuhrrinne ein nicht unerheblicher Spalt, durch den aus dem Schmutzflüssigkeitsraum Flüssigkeit in die Schmutzabfuhrrinne gelangt. Damit wird die Rückspülwirkung an dem Filterelement wesentlich herabgesetzt.

Es ist weiterhin aus der EP 00 49 746 B1 ein Spaltfilter für Schmieröl bekannt, welches mit einem Reinigungselement versehen ist. Das Reinigungselement weist einen Spülkanal auf und besitzt zum einen zu der Filteroberfläche hin gewandte Öffnungen zum Rückspülen des Spaltfilters sowie einen Eintrittsspalt zum Vorreinigen der Filteroberfläche. Mit diesem Reinigungselement soll damit zum einen Grobschmutz mittels des Eintrittsspalts entfernt werden, sowie der in den Filterspalten angelagerte Schmutz über die Rückspülöffnungen.

Ein Nachteil dieses Systems besteht darin, daß durch die Anordnung des Eintrittsspalts für Grobschmutz die Rückspülwirkung sehr stark vermindert wird.

Das Reinigungselemente, das zwar eine kompakte Kombination darstellt, hat jedoch den Nachteil, daß Schmutz unterschiedlicher Zusammensetzung nicht wirksam entfernt werden kann. So ist einerseits der Eintrittsspalt möglichst klein zu halten, um die Rückspülwirkung nicht unnötig zu beeinflussen. Andererseits hat ein kleinerer Eintrittsspalt den Nachteil, daß Grobschmutz sich vor dem Reinigungsspalt ablagert und nicht mit ausgetragen werden kann.

Die geringe Rückspülwirkung des Reinigungselementes wird dadurch noch weiter herabgesetzt, daß ein sehr breiter Umfangsbereich des Filters rückgespült wird und damit sich die Geschwindigkeit der Rückspülströmung stark verringert.

Der Erfindung liegt deshalb die Aufgabe zugrunde, ein Filter zu schaffen, das die genannten Nachteile vermeidet und mit dem Schmutzflüssigkeit, die mit Partikeln unterschiedlichster Größe belastet ist, gefiltert wird und eine wirksame Abreinigung des Filterelements erfolgt.

Diese Aufgabe wird ausgehend von dem Oberbegriff des Hauptanspruchs durch dessen kennzeichnenden Merkmale gelöst.

Der Vorteil der Erfindung liegt darin, daß sich die Rückspülkammer an beliebige Strukturen der Filterfläche anpaßt. Selbst wenn die Filterfläche gewisse Unebenheiten aufweist, erfolgt durch die elastische Ausgestaltung der Trennwände oder die federnde Lagerung der Trennwände eine optimale Anpassung und damit eine hochwirksame Abdichtung zwischen Rückspülkammer und Rohflüssigkeitsbereich.

In einer zweckmäßigen Ausgestaltung kann wenigstens eine der Trennwände ein Vorabstreifer sein, welcher Grobschmutz von der Filterfläche entfernt. Dabei ist die Trennwand nach Art eines Schabers geformt und kann zur Anpassung an Strukturen der Filterfläche längs des Vorabstreifers segmentiert sein. Selbstverständlich besteht auch die Möglichkeit, den Vorabstreifer aus einem Material herzustellen, welches aufgrund seiner elastischen Eigenschaften sich an veränderliches Oberflächenprofil der Filterfläche anpaßt. Gerade bei einem elastischen Material der Trennwand oder bei einer federnd gelagerten Trennwand kann es zweckmäßig sein, einen Anschlag zur Verhinderung des Abhebens derselben von der Filterfläche vorzusehen. Dieser Anschlag ist lediglich ein Sicherungselement, das nur in Extremfallen die Bewegung der Trennwand in einer oder mehreren Richtungen begrenzt.

Eine Weiterbildung der Erfindung sieht vor, die Anlagefläche einer Trennwand schneidenförmig auszubilden oder mit einem verschleißfesten Material zu bestücken. Auch dieses verschleißfeste Material kann schneidenförmig ausgestaltet sein. Entscheidend hierbei ist die Erzielung einer möglichst hohen Standzeit und damit eine Verringerung des Wartungsaufwandes.

Eine weitergehende Verringerung des Wartungsaufwandes kann dadurch erzielt werden, daß der Vorabstreifer oder die schneidenförmig ausgebildete Trennwand mit einer Verschleißanzeige ausgestattet ist. Diese kann ein berührungslos arbeitender Sensor, z. B. ein induktiv wirkendes Element sein, welches einen bestimmten vordefinierten Abstand erfaßt und bei Unterschreitung dieses Abstandes ein Warnsignal erzeugt. Selbstverständlich besteht auch die Möglichkeit eine kapazitive Auslöseelektronik oder ähnliches vorzusehen.

Eine weitere Ausgestaltung der Erfindung sieht vor, nicht nur die Trennwände federnd zu lagern, sondern auch die Rückspülkammer so zu befestigen, daß diese eine vordefinierte Federkraft auf die Trennwände und damit auf die Filterfläche ausübt. Damit werden zwei sich wechselweise unterstützende Systeme geschaffen. Dies führt dazu, daß jedes der elastischen bzw. federnd gelagerten Systeme jeweils einer geringeren Belastung ausgesetzt ist.

Es besteht auch die Möglichkeit, die Rückspülkammer schwenkbar zu fixieren und in Schwerkrichtung mit einer Feder zu versehen, welche die Rückspülkammer in Richtung der Filterfläche bewegt.

Eine weitere vorteilhafte Ausgestaltung der Erfindung ist darin zu sehen, daß die Rückspülkammer über ein Leitungsstück mit einem Filterkopf verbunden ist. Der Filterkopf, über welchen die Rohflüssigkeit zugeführt und die Reinflüssigkeit abgeführt wird, vereinigt damit mehrere Funktionen.

Die Rückspülung des Filters erfolgt in einer bevorzugten Ausführungsform mit Eigenmedium, d. h. die Reinflüssigkeit gelangt durch die Filterfläche in die Rückspülkammer und nimmt dabei die an der Filterfläche anhaftenden Partikel mit. Es besteht die Möglichkeit, die Rückspülung mit verschiedenen Maßnahmen zu unterstützen. Dies kann beispielsweise durch die Unterstützung mit einem Fremdmedium, beispielsweise Druckluft erfolgen, wobei die Druckluft Impulse auf das Eigenmedium abgibt. Es besteht auch die Möglichkeit, mit Fremdenergie wie z. B. Ultraschall oder anderen Impulsgebern die Rückspülung wirksam zu unterstützen. Die Rückspülkammer kann an der Außen- oder Innenseite des Filterelements angeordnet sein.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sind und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt
- Figur 1: die Darstellung der Abreinigung eines Spaltrohrfilters,
- Figur 2: eine Schnittdarstellung eines rückspülbaren Spaltrohrfilters,
- Figur 3: ein Spaltrohrfilter mit einer Rückspülung über einen Filterkopf,
- Figur 4: eine Rückspülkammer mit federnden Trennwänden,
- Figur 5: eine Rückspülkammer mit Federwegbegrenzung,
- Figuren 6 - 10: verschiedene Varianten einer Rückspülkammer,
- Figur 11a: eine Trennwand, z. B. als Vorabstreifer,
- Figur 11b: die Einzelheit Y der Figur 11a,
- Figur 11c: die Einzelheit Y der Figur 11a in einer Variante.

Beim Filtrieren verschmutzter Flüssigkeit, z. B. Kühl-Schmierflüssigkeit (Emulsion) von Werkzeugmaschinen, ist es Aufgabe eines Filters, Schmutzteilchen ab einer bestimmten Größe aus der Flüssigkeit herauszufiltern. Die Größe der herauszufilternden Schmutzteilchen hängt im wesentlichen von der Maschenweite oder der Spaltbreite des Filters ab.

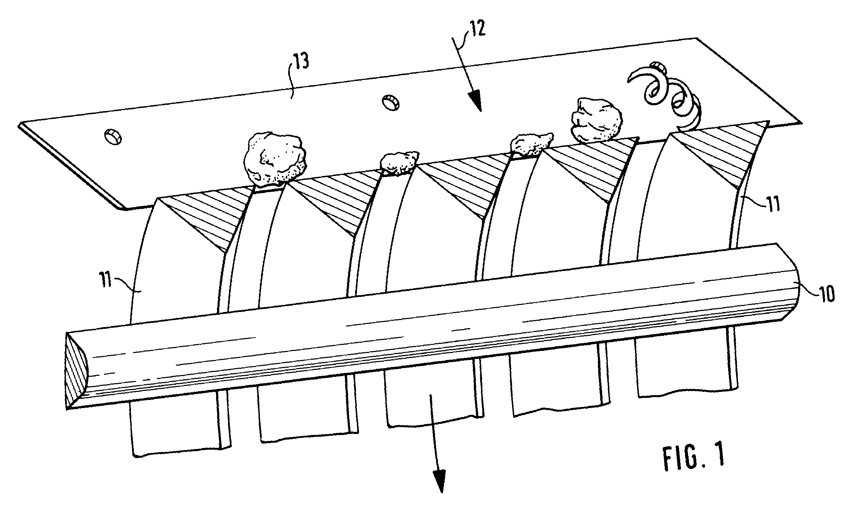

Bei einem Spaltrohrfilter ist, wie in Figur 1 dargestellt, auf Stützstäben, von denen in Figur 1 lediglich ein Stützstab 10 gezeigt ist, ein dreieckförmiger Profildraht gewickelt und an den Stützstäben 10 über Schweißverbindungen befestigt. Der Abstand zwischen den einzelnen Drahtwindungen definiert die Spaltbreite des Filters und beträgt beispielsweise 0,1 mm. Die Schmutzflüssigkeit strömt von außen in Richtung des Pfeils 12. Die Schmutzteilchen lagern sich an der Oberfläche der Profildrahtwicklung ab. Die gereinigte Flüssigkeit wird durch den Innenraum des Filters abgeführt.

Zum Reinigen der Oberfläche des Filters ist das gesamte Filterelement drehbar in einem Gehäuse gelagert. Ein stationär angeordneter Abstreifer 13 entfernt bei einer Drehung des Filterelementes die Schmutzteilchen an der Oberfläche. Insbesondere die Schmutzteilchen, deren Größe etwa der Spaltbreite entspricht, bleiben jedoch teilweise im Spalt hängen.

Diese im Spalt befindlichen Schmutzteilchen werden durch das partielle Rückspülen des Filters durch den entstehenden Differenzdruck zwischen Reinseite und Rückspülkanal entfernt. Das Rückspülen erfolgt dadurch, daß gereinigte Flüssigkeit in umgekehrter Flußrichtung durch den Spalt strömt und dabei die restlichen Schmutzteilchen mitnimmt und in einen drucklosen Schmutzabfuhrkanal führt.

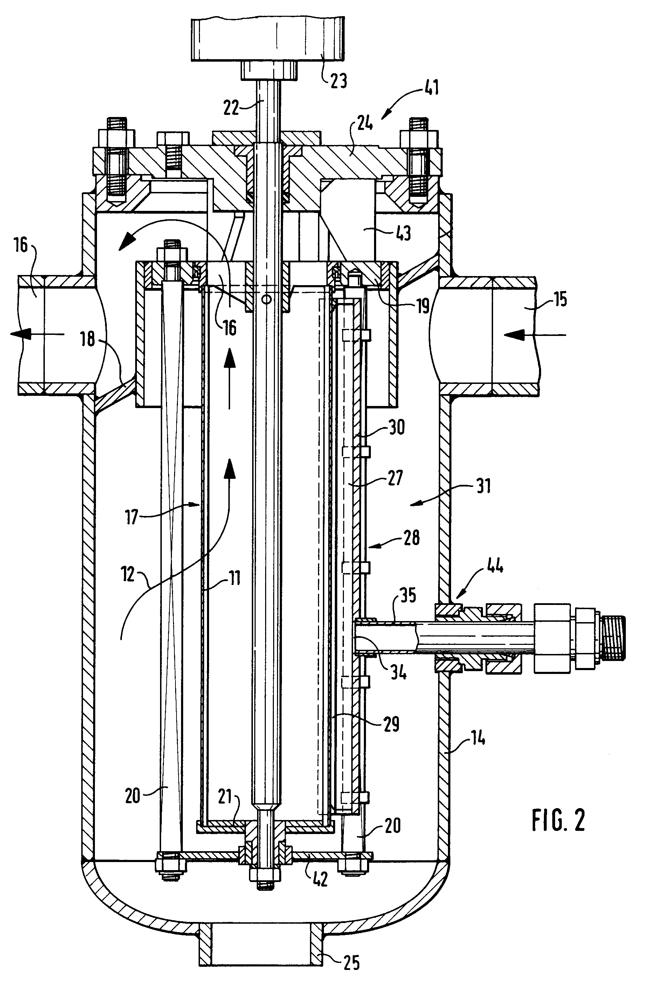

Die Schnittdarstellung des gesamten Aufbaus eines rückspülbaren Spaltrohrfilters zeigt Figur 2. Ein Filtergehäuse 14 weist einen Zulauf 15 für die zu reinigende Flüssigkeit und einen Ablauf 16 auf. Zwischen Zulauf und Ablaufbefindet sich ein Filtereinsatz 31.

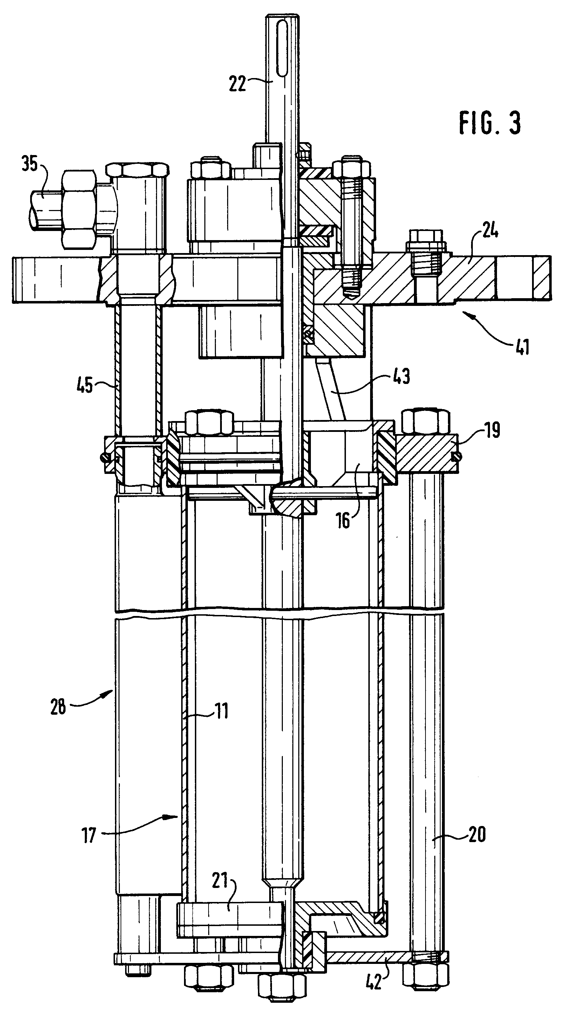

Der Filtereinsatz 31 besteht aus dem Filterelement 17, welches mit einer hier nur schematisch angedeuteten Profildrahtwicklung 11 versehen ist, und einem Filterkopf 41. Im Filtergehäuse 14 ist eine Trennwand 18 angeordnet. Diese Trennwand befindet sich zwischen dem Rohflüssigkeits- und dem Reinflüssigkeitsbereich des Filtereinsatzes 31. Der Filtereinsatz 31 ist mit einer Stützscheibe 19 (s. auch Figur 3) versehen. An dieser Stützscheibe 19 sind Stehbolzen 20 angeordnet, die am unteren Ende einen Lagerflansch 42 des Filtereinsatzes 31 halten. Zwischen dem Lagerflansch 42 und den Stehbolzen 20 befindet sich das drehbar gelagerte Filterelement 17, welches im unteren Bereich durch eine Scheibe 21 verschlossen und im oberen Bereich durch eine segmentierte Scheibe 16 über die Spindel 22 befestigt ist. Die Stützscheibe 19 ist über Trägerelemente 43 mit einem Deckel 24 verbunden. Diese Elemente bilden gemeinsam den Filterkopf 41.

Der Deckel 24 weist eine flüssigkeitsdichte Öffnung für eine Welle 22 auf. Diese Welle dient als Antriebswelle für das Filterelement 17. Der Deckel 24 ist mit hier nur schematisch angedeuteten Schraubverbindungen an dem Filtergehäuse 14 befestigt und dichtet die obere Öffnung des Filtergehäuses ab.

Am unteren Ende des Filtergehäuses 14 befindet sich ein Schmutzflüssigkeitsauslauf 25, der mit einem hier nicht dargestellten Ventil versehen ist. Dieser Schmutzflüssigkeitsauslauf 25 dient dazu, die sich am Boden des Filtergehäuses 14 absetzenden groben Schmutzpartikel auszutragen.

Eine Rückspüleinrichtung 28 besteht aus einem Schnlutzabfuhrkanal 27, der sich über die gesamte wirksame Länge des Filterelements 17 erstreckt. Der Schmutzabfuhrkanal 27 weist an der zu der Oberfläche des Filterelements 17 gerichteten Seite versetze Nuten 29 über die gesamte Länge des Filterelementes 17 auf, durch welche der rückgespülte Schmutz und die Rückspülflüssigkeit in den Schmutzabfuhrkanal 27 gelangen.

Die Rückspüleinrichtung 28 ist mit einer ruckwärtigen Wand 30 versehen. In dieser Wand befindet sich eine Öffnung 34, an welcher ein Auslaufrohr 35. das mit einem hier nicht dargestellten Ventil versehen ist, zum Austrag der Rückspülflüssigkeit eingesteckt ist. Dieses Auslaufrohr 35 verläuft durch einen flüssigkeitsdichten Wanddurchbruch 44 des Filtergehäuses 14.

Das Filterelement 17 kann mittels des Handrades 23 gedreht werden. Anstelle des Handrades kann auch ein Getriebemotor, ein pneumatischer oder hydraulischer Antrieb oder auch eine Ratsche verwendet werden. Bei geöffnetem Auslaufrohr 35 werden die Nuten 29 partiell gereinigt. Bei einer Umdrehung wird die gesamte Umfangsfläche des Filterelements 17 partiell gereinigt. Dies erfolgt während des Betriebes mit ca. 5 % der Durchflußmenge.

Figur 3 zeigt eine Rückspülung mit einer Rückspülleitung, die über den Filterkopf 41 führt. Die Rückspülung erfolgt auch hier über die Rückspüleinrichtung 28. Von dieser Rückspüleinrichtung aus geht ein Leitungsstück 45 zu einem Anschluß- bzw. Auslaufrohr 35.

Wie bereits in Figur 2 ersichtlich befinden sich der Rohflüssigkeitszulauf und der Reinflüssigkeitsablauf im oberen Bereich des Filtergehäuses. Es besteht auch die Möglichkeit, die beiden Öffnungen im Filterkopf 41 anzuordnen. Dadurch ergeben sich Vorteile bei der Montage und Demontage der Rückspülleitung, da die Fügestelle gut sichtbar, gut zugänglich und mit einem festen Anschlag versehen ist. Die Abreinigung erfolgt auch hier durch Drehen des Filterelements 17 über die Welle 22.

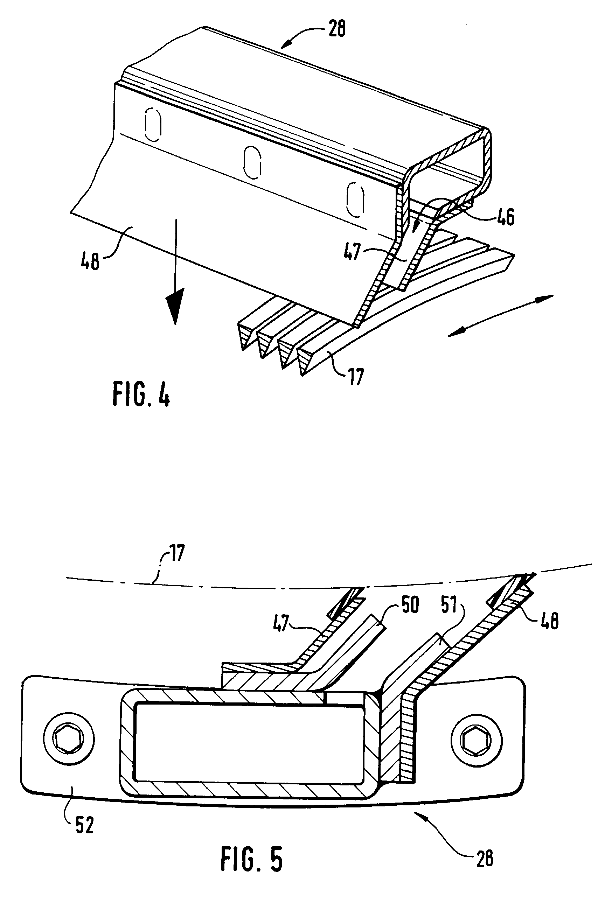

Figur 4 zeigt eine Rückspülkammer mit federnden Trennwänden in einer Detaildarstellung. die Rückspülkammer 28 ist nach Art eines Rechteckhohlprofils ausgestattet und hat einen schlitzförmigen Flüssigkeitszutritt 46. An den beiden dem Flüssigkeitszutritt 46 benachbarten Schenkeln sind federnde Trennwände 47, 48 befestigt. Diese liegen mit ihren freien Enden auf einem Filterelement 17. Bei entsprechender Einstellung der Rückspülkammer 28 üben die beiden Trennwände eine in Richtung des Filterelements 17 gerichtete Kraft aus und bilden damit eine Abdichtung zwischen der Kammer, welche sie umschließen und dem außerhalb dieser Kammer befindlichen Rohflüssigkeitsbereich.

Figur 5 zeigt einen Querschnitt durch eine Rückspülkammer 28. Die Trennwand 48 und die Trennwand 47 sind auch hier federblechartige Elemente. Zur Abstützung der Trennwand 47 ist ein Anschlag 50 vorgesehen. Aus Elastizitätsgründen darf die Trennwand 47 nicht an dem Anschlag 50 anliegen, da somit der Federweg für den Ausgleich der Unrundheit nicht ausreicht und es je nach Einstellung zu plastischen Verformungen der Trennwand 47 kommt. Die Trennwand 48 kann zur Erhöhung der Steifigkeit im Befestigungsbereich mit einem Stützelement 51 versehen sein. Die Rückspülkammer 28 ist an ihrer Stirnseite wie dargestellt über einen Befestigungsflansch 52 an einer hier nicht dargestellten Lagerscheibe befestigt.

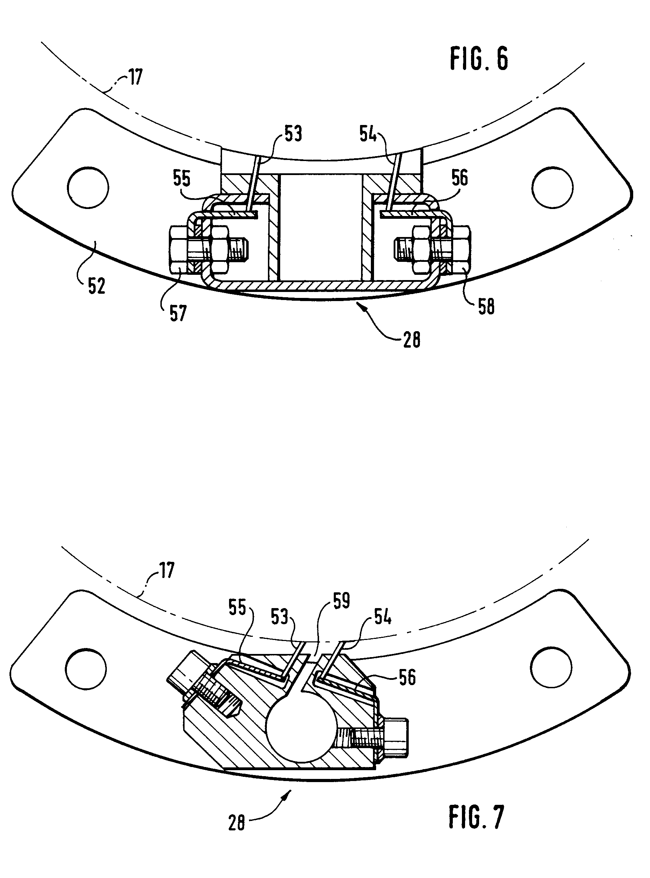

Figur 6 zeigt eine Rückspülkammer 28, bei welcher die Trennwände als Abstreifer 53, 54 ausgebildet sind. Diese liegen an Federschenkeln 55, 56 an, wobei die Federschenkel eine Kraft in Richtung eines hier nur schematisch angedeuteten Filterelements 17 ausüben. Die Federschenkel 55, 56 sind über Schraubverbindungen 57, 58 an der Rückspülkammer 28 befestigt. Die Abstreifer 53, 54 verlaufen in schlitzförmigen Nuten der Rückspülkammer 28 und werden damit hinsichtlich ihres Anstellwinkels zu dem Filterelement 17 fixiert. Auch in dieser Figur ist die Rückspülkammer auf einem Befestigungsflansch 52 befestigt.

Figur 7 zeigt in einer weiteren Variante eine Rückspülkammer 28, welche es ermöglicht, einen schmalen Rückspülbereich 59 zu bilden. Auch hier sind Abstreifer 53, 54 vorgesehen, welche in schlitzförmigen Öffnungen der Rückspülkammer 28 verlaufen. Diese Abstreifer werden auch hier über Federschenkel 55, 56 mit jeweils einer Kraft beaufschlagt, die die Abstreifer in Richtung des Filterelements 17 anlegen.

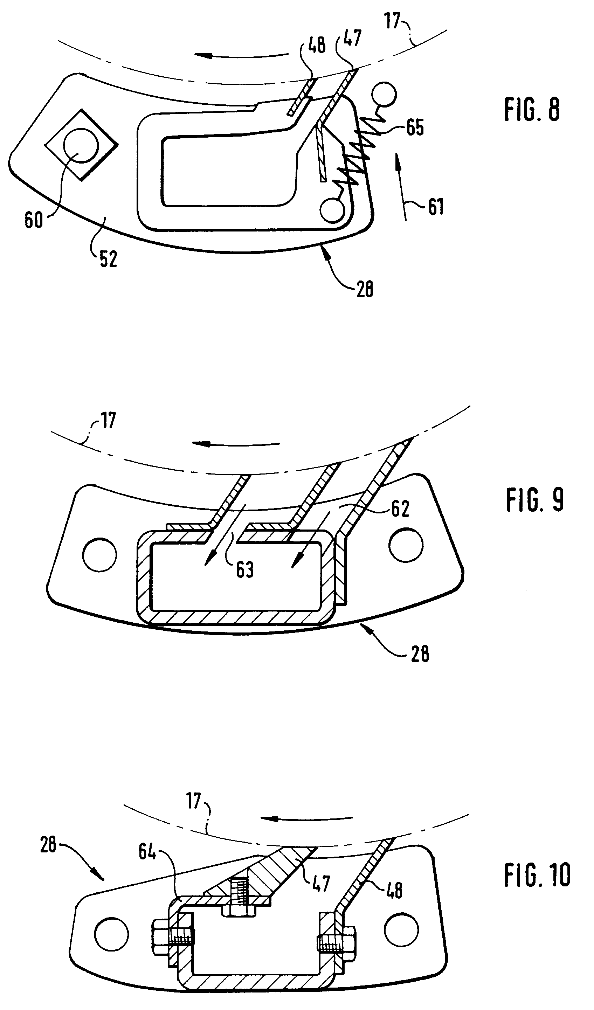

Figur 8 zeigt eine Rückspülkammer 28 mit einem Befestigungsflansch 52, wobei dieser lediglich einseitig über die Achse 60 an einer Trägerstruktur befestigt ist. Über eine geeignete Feder 65 erfahrt die Rückspülkammer 28 eine Kraft in Richtung des Pfeils 61. Damit wird die Abdichtung des Rückspülbereichs von dem Rohflüssigkeitsbereich bewirkt. Bei der Feder 65 kann es sich um eine Druckfeder, Zugfeder oder um eine geeignete Blattfeder handeln. Die Trennwände 47, 48 können ebenfalls elastisch sein und unterstützen damit die Anpassung der Rückspülkammer an eine variablen Oberflächenstruktur des Filterelements 17.

Figur 9 zeigt eine Variante einer Rückspülkammer 28 mit einem ersten Flüssigkeitszulauf 62 und einem zweiten Flüssigkeitszulauf 63. Es besteht die Möglichkeit, durch entsprechende Variation der Breite der jeweiligen Flüssigkeitszulauföffnungen die Rückspülwirkung zu variieren. In dem hier gezeigten Beispiel ist die Rückspülfläche im Flüssigkeitszulauf 62 etwas geringer als die Rückspülfläche im Flüssigkeitszulauf 63. Es erfolgt deshalb im Flüssigkeitszulauf 62 eine Abreinigung des Grobschmutzes und im Flüssigkeitszulauf 63 eine Abreinigung auch hinsichtlich des Feinschmutzes.

Figur 10 zeigt eine Rückspülkammer 28, bei welcher die Trennwand 47 als keilförmiges Element ausgebildet ist. Dieses ist an einem Federschenkel 64 befestigt. Die Trennwand 48 ist ein Federblech, welches als Abstreifer unmittelbar an der Rückspülkammer 28 befestigt ist.

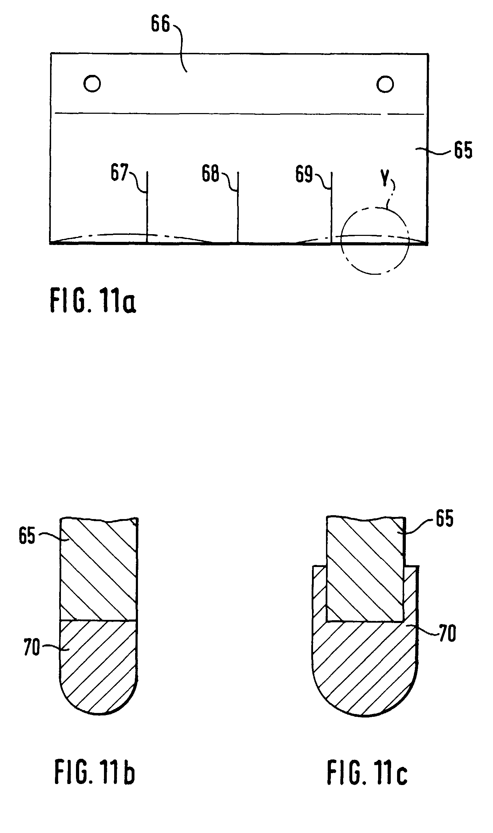

Figur 11a zeigt einen Abstreifer, wie er beispielsweise bei Figur 10 als Trennwand 48 zur Anwendung kommt. Dieser Abstreifer 65 weist einen Befestigungsbereich 66 auf, über welchen er an einer hier nicht dargestellten Rückspülkammer befestigt wird. Das freie Ende des Abstreifers 65 kann in einzelne Segmente aufgeteilt sein. Hierzu sind Schlitze 67, 68, 69 vorgesehen. Diese ermöglichen eine variable Anpassung des Abstreifers an unterschiedliche Oberflächen des Filterelements.

Figur 11b zeigt die Vorderkante des Abstreifers 65 in einer Detaildarstellung Y. Diese Vorderkante ist mit einer Keramikbeschichtung 70 versehen oder mit einem anderen harten oder gehärteten Werkstoff

Figur 11c zeigt ebenfalls eine verstärkte bzw. verschleißfeste Vorderkante des Abstreifers 65. Hier ist die Vorderkante vollständig in ein entsprechendes Material eingebettet, wobei die Struktur des Materials, welches unmittelbar an dem Filterelement anliegt, so gestaltet werden kann, daß einerseits eine gute Abreinigungswirkung erfolgt, andererseits eine hohe Dichtwirkung zwischen Rückspülraum und Rohflüssigkeitsraum erzielt wird.

## Patentansprüche

1. Filter für Flüssigkeiten, insbesondere Spaltfilter mit einer ebenen oder gekrümmten Filterfläche sowie einem die Filterfläche partiell erfassenden Reinigungssystem, wobei dieses aus einer im Rohflüssigkeitsbereich vorgesehenen Rückspülkammer besteht, welche wenigstens zwei Trennwände aufweist, welche die Rückspülkammer von dem Rohflüssigkeitsbereich abtrennen und an der Filterfläche anliegen, dadurch gekennzeichnet, daß die Trennwände (47, 48) in Richtung der Filterfläche (49) elastisch ausgebildet sind oder unabhängig voneinander federnd gelagert sind.

2. Filter nach Anspruch 1, dadurch gekennzeichnet, daß wenigstens eine der Trennwände (47) ein Vorabstreifer ist und Grobschmutz von der Filterfläche (49) entfernt.

3. Filter nach einem der vorherigen Ansprüche, dadurch gekennzeichnet, daß wenigstens eine Trennwand (65) segmentiert ist.

4. Filter nach einem der vorherigen Ansprüche, dadurch gekennzeichnet, daß wenigstens eine Trennwand (48) mit einem Anschlag (51) zur Verhinderung des Abhebens aufgrund des Differenzdruckes zwischen Rohflüssigkeitsbereich und Rückspülkammer versehen ist.

5. Filter nach einem der vorherigen Ansprüche, dadurch gekennzeichnet, daß die Anlagefläche einer Trennwand (47) schneidenförmig ausgebildet ist und aus einem verschleißfesten Material besteht oder mit einem verschleißfesten Material, z. B. Keramik (70) bestückt ist.

6. Filter nach einem der vorherigen Ansprüche, dadurch gekennzeichnet, daß wenigstens eine schneidenförmig ausgebildete Trennwand (47) mit einer Verschleißanzeige ausgestattet ist.

7. Filter nach einem der vorherigen Ansprüche, dadurch gekennzeichnet, daß die Rückspülkammer (28) federnd gelagert ist und/oder wenigstens eine der Trennwände (47, 48) unabhängig von der Rückspülkammer (28) federnd gelagert ist.

8. Filter nach einem der vorherigen Ansprüche, dadurch gekennzeichnet, daß die Rückspülkammer (28) über ein Leitungsstück (45) mit einem Filterkopf (41) verbunden ist und der Anschluß der Rückspülleitung über den Filterkopf (41) erfolgt.

9. Filter nach einem der vorherigen Ansprüche, dadurch gekennzeichnet, daß die Rückspülung mit Eigenmedium erfolgt.

10. Filter nach einem der vorherigen Ansprüche, dadurch gekennzeichnet, daß die Rückspülung mit Eigenmedium und Unterstützung eines Fremdmediums oder Fremdenergie erfolgt.

11. Filter nach einem der vorherigen Ansprüche, dadurch gekennzeichnet, daß die Rückspülung mit impulserzeugenden Mitteln erfolgt, insbesondere mittels Fremdenergie oder Ultraschall.
